# FASCICULE DE BREVET EUROPEEN

(11) **EP 2 183 453 B1**
(45) Date de publication et mention de la délivrance du brevet: **11.05.2016**
(21) Numéro de dépôt: 08803127.3
(22) Date de dépôt: 21.08.2008
(51) Int. Cl.: E05B 83/36, E05B 81/20, E05B 81/78, E05B 85/00

(54) **PROCÉDÉ DE DÉVERROUILLAGE AUTOMATIQUE D'UN OUVRANT DE VÉHICULE AUTOMOBILE POUR SYSTÈME MAINS-LIBRES ET DISPOSITIF POUR LA MISE EN OEUVRE DU PROCÉDÉ**
VERFAHREN ZUR AUTOMATISCHEN ENTRIEGELUNG EINERS ÖFFNUNGSELEMENTS EINER KRAFTFAHRZEUGS FÜR EIN FREISPECHSYSTEM UND VORRICHTUNG ZUR UMSETZUNG DES VERFAHRENS
METHOD OF AUTOMATICALLY UNLOCKING AN OPENING MEMBER OF A MOTOR VEHICLE FOR A HANDS-FREE SYSTEM, AND DEVICE FOR IMPLEMENTING THE METHOD

(30) Priorité: 21.08.2007 FR 0705948
(43) Date de publication de la demande: 12.05.2010
(73) Titulaire: U-Shin France SAS, 94046 Créteil Cedex (FR)
(72) Inventeur: GIRAUD, Frédéric, F-94042 Créteil Cedex (FR); MENARD, Eric, F-94042 Créteil Cedex (FR); SENPAUROCA, Joël, F-94042 Créteil Cedex (FR)
(74) Mandataire: Huisman, Aurélien
(86) Numéro de dépôt international: PCT/EP2008/060953
(87) Numéro de publication internationale: WO 2009/024602

(56) Documents cités:
- EP-A- 0 770 749
- EP-A- 1 139 286
- DE-A1- 10 038 803
- DE-A1- 10 361 115
- DE-B3-102004 041 709
- US-A1- 2007 132 552

## Description

La présente invention concerne un procédé de déverrouillage automatique d'un ouvrant de véhicule automobile pour système mains-libres et dispositif pour la mise en oeuvre du procédé.

D'une manière générale, le procédé selon l'invention s'applique à un véhicule équipé d'un système d'accès mains libres destiné à ce qu'un utilisateur du véhicule puisse entrer dans celui-ci sans avoir à manipuler de clé ou de télécommande.

Il se développe à l'heure actuelle de nombreux systèmes, à accès mains libres, qui assurent le déverrouillage / décondamnation et l'ouverture automatiques des ouvrants du véhicule dès que l'utilisateur portant sur lui un badge d'identification approche du véhicule dans un périmètre prédéterminé. Dans ce cas, le périmètre prédéterminé est constitué par un espace extérieur entourant le véhicule, par exemple à une distance de quelques mètres jusqu'à éventuellement une dizaine de mètres. Afin de couvrir tout ce périmètre prédéterminé, on met usuellement en place un nombre important d'antennes réparties à divers endroits sur le pourtour du véhicule afin de détecter la présence de l'identifiant. De telles antennes sont par exemple disposées dans les rétroviseurs, les poignées de porte et les montants de porte. Lorsque l'identifiant s'éloigne de ce périmètre prédéterminé, le système assure la condamnation automatique des ouvrants du véhicule.

Le plus souvent un capteur d'approche est couplé au système d'accès mains libres pour qu'une tentative d'authentification soit déclenchée uniquement lorsque le capteur d'approche détecte la présence d'un utilisateur. Ainsi, dans le cas où la tentative d'authentification est un succès, le dispositif de reconnaissance déclenche le déverrouillage d'un ou de plusieurs ouvrants du véhicule.

Toutefois, on rencontre dès fois avec les systèmes interactifs des problèmes de déverrouillages intempestifs des ouvrants. La seule présence du porteur de badge dans l'environnement du véhicule suffit en effet à déverrouiller les portières et il arrive que les échanges entre le badge et l'unité d'émission/réception du véhicule commandent le déverrouillage des portières sans que l'utilisateur ne l'ait souhaité ou en ait conscience.

Cependant, si le système déverrouille tous les ouvrants du véhicule, il existe le risque qu'une personne mal intentionnée s'approche du véhicule pour par exemple voler des objets dans le véhicule.

Par ailleurs, on connaît de la demande de brevet EP0770749 au nom du Demandeur un système mains libres d'une première génération fonctionnant sur la base d'une technologie à transpondeur.

Le système décrit dans cette demande permet une ouverture / déverrouillage d'un ouvrant déterminé sans intervention directe des mains. Toutefois, il impose que l'utilisateur porte un transpondeur à la poignée et qu'il présente ce transpondeur devant des antennes réceptrices installées par exemple au niveau du coffre pour pouvoir déclencher le déverrouillage / ouverture du coffre.

Ainsi, si on porte une caisse à deux mains, une telle approche de la main des antennes de transpondeur peut s'avérer mal aisé. En outre, étant donné que les échanges entre le transpondeur et les antennes réceptrices se font que sur une courte distance, l'utilisateur doit connaître assez précisément la localisation des antennes, ce qui n'est pas toujours le cas, en particulier s'il s'agit d'un véhicule de location. Les documents DE -B3- 10 2004041709, DE -A1-10361115, DE -A1- 10038803, EP -A1- 1139286 et US -A1- 2007/0132552 proposent des solutions diverses pour résoudre ce problème.

Le document DE 103 61 115 propose un procédé de déverrouillage dans lequel un prédéterminé est reconnu par mesure d'une distance ou détection d'une position d'un élément d'authentification.

La présente invention vise à proposer un procédé de déverrouillage automatique d'un ouvrant de véhicule automobile pour système mains- libres permettant de s'affranchir du fait de devoir présenter un identifiant actif à un emplacement précis du véhicule pour déclencher le déverrouillage de l'ouvrant tout en conservant un niveau de sécurité élevé afin d'empêcher tout accès à des personnes mal intentionnées.

A cet effet, l'invention a pour objet un procédé pour déverrouiller automatiquement un ouvrant d'un véhicule automobile à l'aide d'un système d'accès mains libres selon la revendication 1.

Puis, l'invention a pour objet un dispositif pour déverrouiller automatiquement un ouvrant d'un véhicule automobile pour la mise en oeuvre du procédé tel que défini ci-dessus, selon la revendication 7.

D'autres avantages et caractéristiques apparaîtront à la lecture de la description d'un exemple de réalisation non limitatif de l'invention, ainsi que des dessins annexés sur lesquels :
- la figure 1 est une vue de dessus d'un véhicule équipé d'un dispositif selon l'invention,
- la figure 2 est un schéma synoptique du dispositif selon l'invention,
- la figure 3 est une vue de côté du véhicule de la figure 1 avec un conducteur souhaitant ouvrir le coffre du véhicule, et
- la figure 4 est un organigramme du procédé selon l'invention.

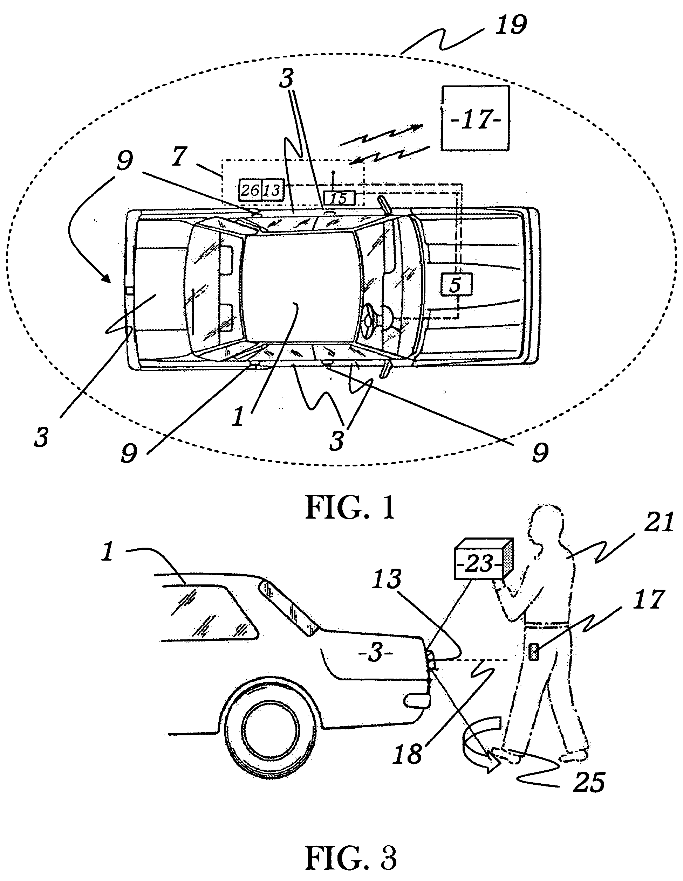

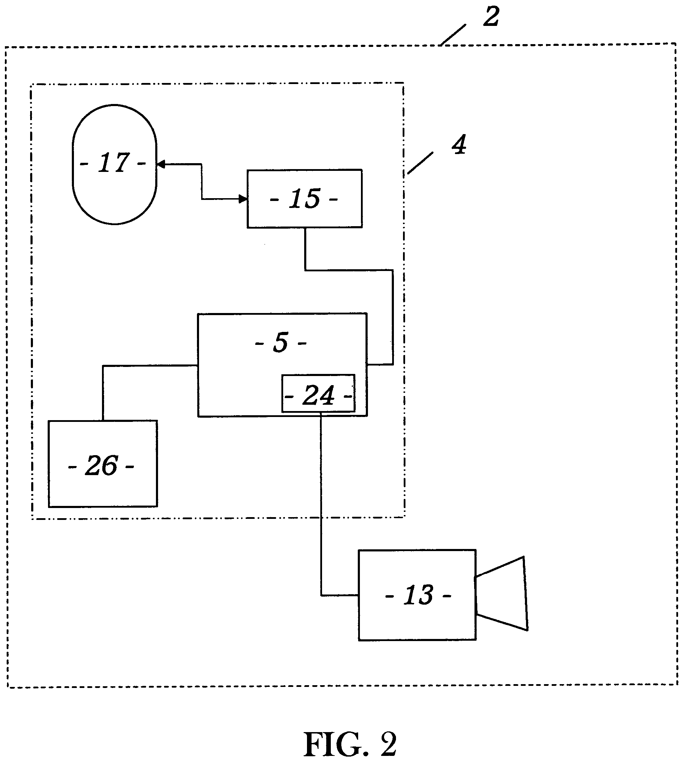

On va maintenant décrire un mode de réalisation de l'invention en référence aux figures 1 à 4. Sur toutes les figures, les éléments identiques portent les mêmes numéros de référence.

La figure 1 montre un véhicule automobile 1 équipé d'un dispositif 2 selon l'invention pour déverrouiller automatiquement un ou plusieurs ouvrants 3 du véhicule automobile.

Par ouvrant, on comprend naturellement les portes latérales à pivotement ou à coulissement ainsi que le coffre ou le hayon du véhicule.

Ce dispositif 2 selon l'invention comprend un système d'accès mains libres 4 comprenant une unité centrale 5 destiné à être installée à l'intérieur du véhicule 1 qui est reliée à des périphériques 7 installées par exemple au niveau de ou dans chaque poignée 9. Par poignée, on comprend non seulement les poignées des portières, mais bien entendu aussi celle d'un hayon ou d'un coffre.

Les périphériques comprennent par exemple une caméra 13 pour permettre la reconnaissance d'un geste d'un utilisateur, en particulier le mouvement d'un pied, de préférence la rotation d'un pied ou le sens de rotation d'un pied, et un émetteur / récepteur 15 pour permettre la communication à distance avec un organe d'identification portatif 17 porté par le conducteur du véhicule.

Selon un mode de réalisation alternatif non représenté, on envisage l'utilisation d'un capteur infrarouge tel que connu dans le document US2006/044800 pour suivre et reconnaître les gestes d'un utilisateur.

Bien entendu, les émetteurs / récepteurs 15 peuvent également être disposés dans d'autres endroits du véhicule indépendamment des poignées, comme par exemple le plafond du véhicule ou dans les montants.

En ce qui concerne les caméras 13, celles-ci peuvent être des caméras noir et blanc ou en couleur. Elles sont avantageusement agencées de manière que l'axe optique 18 est perpendiculaire aux plans latéraux ou arrière du véhicule 1 pour éviter tout effet de masque vis-à-vis de la caméra quand on est face à l'ouvrant.

L'organe d'identification 17 est par exemple réalisé sous forme d'un badge et comporte des moyens de radiocommunication avec l'émetteur / récepteur 15 relié à l'unité centrale 5 pour permettre la communication par radiofréquences à distance avec l'organe d'identification 17.

Cette communication sert en particulier à l'authentification de l'organe 17, c'est-à-dire à la vérification que l'organe 17 est bien associé au véhicule 1.

L'authentification est déclenchée lorsque l'organe d'identification 17 est détecté à l'intérieur d'un périmètre prédéfini 19 autour du véhicule 1.

La forme du périmètre 19 est dans le présent cas une ellipse, mais bien entendu, d'autres formes peuvent également être envisagées.

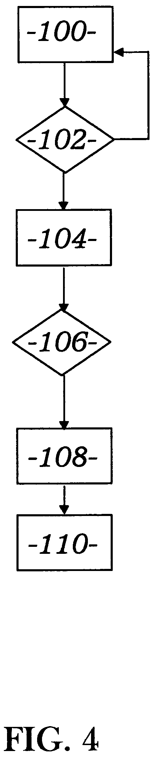

On se tournera maintenant plus particulièrement aux figures 3 et 4 pour décrire le fonctionnement du dispositif selon l'invention et pour détailler le procédé selon l'invention.

Sur la figure 3, on a représenté un conducteur 21 portant un organe d'identification 17 dans une poche et chargé d'un objet 23 qu'il souhaite déposer dans le coffre 3 du véhicule 1.

Selon une première étape 100 du procédé, on détecte la présence de organe d'identification 17 dans le périmètre prédéfmi 19 autour du véhicule 1.

La détection d'un organe 17 va réveiller dans l'unité centrale 5 un calculateur d'accès qui procède lors d'une étape 102 par radiocommunication à l'authentification de l'organe d'identification 17 pour vérifier que ce dernier est bien associé au véhicule 1.

En cas d'authentification négative, on retourne à l'étape 100 pour scruter la présence d'un organe d'identification 17 à l'intérieur d'un périmètre 19.

En cas d'authentification positive, on place le système d'accès dans un état «prêt à déverrouiller» pour tous les ouvrants à l'étape 104. Ceci a aussi pour conséquence d'activer les caméras 13 qui commencent à enregistrer des images. Les moyens de reconnaissance optique à distance d'un geste prédéterminé d'un membre du corps, notamment la caméra, sont donc seulement activés après une authentification positive, ce qui permet une gestion optimisée de l'énergie de la batterie du véhicule.

De préférence, dans un premier temps, par l'intermédiaire des caméras 13 et un calculateur de traitement d'images 24 dans l'unité centrale 5, on identifie l'ouvrant devant quel se trouve le conducteur 21.

Une fois que l'unité centrale 3 a déterminé l'ouvrant concerné, les caméras associées aux autres ouvrants arrêtent d'enregistrer des images pour libérer de la capacité de traitement pour le calculateur de traitement d'images 24.

Alternativement, un capteur d'approche 26 est également placé dans la poignée 9 ou à proximité de celle-ci pour activer seulement la caméra de l'ouvrant 3 concerné. Dans le présent exemple, l'ouvrant concerné 3 est le coffre (voir figure 3).

Puis, lors d'une étape 106, on reconnaît optiquement à distance par la caméra 13 un geste prédéterminé d'un membre du corps. Cette étape de reconnaissance optique à distance par une caméra d'un geste prédéterminé d'un membre du corps est réalisée de préférence partir d'images en niveaux de gris pour optimiser le couple capacité / coût du calculateur de traitement d'images 24.

Il s'est avéré judicieux de pouvoir reconnaître le mouvement d'un pied 25, en particulier le mouvement de rotation ou le sens de rotation du pied 25 du conducteur 21. En effet, le mouvement d'un pied est discret tout en étant bien reconnaissable pour la caméra et le calculateur de traitement d'images.

Lors d'une étape 108, en cas de reconnaissance positive du geste, l'ouvrant 3 devant lequel le geste a été exécuté, est déverrouillé, c'est-à-dire la serrure est déverrouillée.

Si le coffre est équipé de ressorts adaptés le sollicitant automatiquement vers une position ouverte, alors, le coffre s'ouvre.

Dans le cas où l'ouvrant 3 est équipé d'une unité d'assistance motorisée à l'ouverture de l'ouvrant (non représenté), il s'ensuit une étape 110 d'ouverture automatique de l'ouvrant 3 par l'intermédiaire de l'unité d'assistance motorisée.

On comprend donc que grâce aux caractéristiques de l'invention, le conducteur peut accéder aisément et de façon sécurisée à son véhicule. Le système se distingue en outre par une gestion optimisée de la consommation d'énergie étant donné que le dispositif est activé successivement en fonction de diverses étapes du procédé.

## Revendications

1. Procédé pour déverrouiller automatiquement un ouvrant (3) d'un véhicule automobile (1) à l'aide d'un système d'accès mains libres (4) comprenant une unité centrale (5) destinée à être installée à l'intérieur du véhicule (1), un organe d'identification portatif (17), ladite unité centrale (5) étant apte à communiquer par radio fréquences à distance avec l'organe d'identification (17) pour l'authentifier et, en réponse à l'authentification de l'organe d'identification (17), commander le verrouillage ou le déverrouillage de l'ouvrant du véhicule, le procédé comprenant les étapes suivantes :
- détecter la présence d'un organe d'identification (17) dans un périmètre prédéfini (19) autour du véhicule (1),
- authentifier que l'organe d'identification (17) est associé au véhicule (1),
- en cas d'authentification positive, placer le système d'accès dans un état « prêt à déverrouiller » pour tous les ouvrants (3),
caractérisé en que le procédé comprend en outre une étape (106) de reconnaissance optique à distance d'un geste prédéterminé d'un membre du corps (25) l'étape de reconnaissance étant réalisé à l'aide d'une caméra et comprenant la reconnaissance du mouvement d'un pied (25), et en ce qu'en cas de reconnaissance positive du geste, l'ouvrant (3) devant lequel le geste a été exécuté, est déverrouillé.

2. Procédé selon la revendication précédente, **caractérisé en ce que** l'étape de reconnaissance comprend la reconnaissance du mouvement de rotation d'un pied (25).

3. Procédé selon la revendication 2, **caractérisé en ce que** l'étape de reconnaissance comprend la reconnaissance du sens de rotation d'un pied (25).

4. Procédé selon l'une quelconque des revendications précédentes dans lequel l'ouvrant (3) est équipé d'une unité d'assistance motorisée à l'ouverture de l'ouvrant, **caractérisé en ce que** l'étape de déverrouillage (108) est suivie d'une ouverture automatique (110) de l'ouvrant par l'intermédiaire de l'unité d'assistance motorisée

5. Procédé selon l'une quelconque des revendications précédentes, **caractérisé en ce que** les moyens de reconnaissance optique à distance d'un geste prédéterminé d'un membre du corps, notamment la caméra (13), sont seulement activés après une authentification positive.

6. Procédé selon l'une quelconque des revendications précédentes, **caractérisé en ce que** l'étape (106) de reconnaissance optique à distance par une caméra (13) d'un geste prédéterminé d'un membre du corps est réalisée partir d'images en niveaux de gris.

7. Dispositif pour déverrouiller automatiquement un ouvrant (3) d'un véhicule automobile (1) pour la mise en oeuvre du procédé selon l'une quelconque des revendications 1 à 6, comprenant un système d'accès mains libres (4) comprenant une unité centrale (5) destinée à être installée à l'intérieur du véhicule, un organe d'identification portatif (17), ladite unité centrale (5) étant apte à communiquer par radio fréquences à distance avec l'organe d'identification (17) lors que l'organe d'identification est localisé dans un périmètre prédéfinie (19) autour du véhicule (1) pour authentifier l'organe d'identification (17) et en réponse à l'authentification de l'organe d'identification (17) commander le verrouillage ou le déverrouillage de l'ouvrant (3) du véhicule (1), **caractérisé en ce qu'**il comprend en outre des moyens (13) de reconnaissance optique à distance d'un geste prédéterminé d'un membre du corps pour déverrouiller l'ouvrant devant lequel le geste a été exécuté en cas de reconnaissance positive du geste, les moyens de reconnaissance optique à distance d'un geste prédéterminé comprenant une caméra (13), et étant aptes à reconnaître le mouvement d'un pied (25).

8. Dispositif selon la revendication 7, **caractérisé en ce que** les moyens (13) de reconnaissance sont aptes à reconnaître la rotation ou le sens de rotation d'un pied (25).

## Patentansprüche

1. Verfahren zum automatischen ein Blatt (3) eines Kraftfahrzeugs (1) mit einem Freisprech-Zugangssystem (4), umfassend eine Zentraleinheit (5) Entriegeln vorgesehen im Inneren des Fahrzeugs installiert werden (1), einem tragbaren Identifizierungselement (17), wobei die Zentraleinheit (5) zur Kommunikation mit Funkfrequenzabstand mit dem Identifizierungselement fähig ist, (17) zu authentifizieren, und, in Reaktion auf die Authentifizierung der Identifikationseinheit (17), um das Verriegeln oder Entriegeln der Fahrzeugtür, wobei das Verfahren die folgenden Schritte umfasst:
- Erfassen des Vorhandenseins eines Identifizierungselements (17) in einem vorgegebenen Umfang (19) um das Fahrzeug (1),
- Authentifizieren, dass das Identifizierungselement (17) mit dem Fahrzeug verbunden ist (1),
- Im Falle einer positiven Authentifizierung, stellen Sie den Zugangssystem in einem Zustand für die ganze Öffnung (3) "ready to unlock"
**dadurch gekennzeichnet, dass** das Verfahren ferner einen Schritt (106) der entfernten optischen Erkennung einer vorbestimmten Geste eines Körperteils (25) der Erkennungsschritt mit einer Kamera durchgeführt wird, umfassend Erkennen der Bewegung eines Fußes (25) und dass bei positiver Erkennung der Geste, die Öffnung (3) vor dem die Aktion ausgeführt wurde, wird entsperrt.

2. Verfahren nach dem vorhergehenden Anspruch, **dadurch gekennzeichnet, dass** der Erkennungsschritt umfasst, um die Drehbewegung eines Fußes zu erkennen (25).

3. Verfahren nach Anspruch 2, **dadurch gekennzeichnet, dass** der Erkennungsschritt umfasst die Drehrichtung eines Fußes (25) zu erkennen.

4. Verfahren nach einem der vorhergehenden Ansprüche, wobei das Blatt (3) mit einem motorischen Trägereinheit zum Öffnen der Tür ausgestattet ist, **dadurch gekennzeichnet, dass** der Freisetzungsschritt (108) nach gefolgt wird eine automatische Öffnung (110) der Öffnung mit Hilfe der motorgetriebenen Unterstützungseinheit.

5. Verfahren nach einem der vorhergehenden Ansprüche, **dadurch gekennzeichnet, dass** die Mittel der Fern optischen Erkennung einer vorbestimmten Geste eines Körperteils , einschließlich der Kamera (13) erst nach einer positiven Authentifizierung aktiviert werden.

6. Verfahren nach einem der vorhergehenden Ansprüche, **dadurch gekennzeichnet, dass** der Schritt (106) der entfernten optischen Erkennung von einer Kamera (13) einer vorbestimmten Geste eines Körperelements aus Bildern Ebenen gebildet wird grau.

7. Vorrichtung zum automatischen ein Blatt (3) eines Kraftfahrzeugs (1) zur Durchführung des Verfahrens nach einem der Ansprüche Entriegeln 1 bis 6, mit einem Freisprech-Zugangssystem (4), umfassend eine Zentraleinheit (5) vorgesehen im Inneren des Fahrzeugs angebracht zu werden, einem tragbaren Identifizierungselement (17), wobei die Zentraleinheit (5) in der Lage ist, mit dem Identifikationselement verwendet entfernten Funkfrequenzen zu kommunizieren (17) während in einem vorgegebenen Umfang (19) um das Fahrzeug (1), dass das Identifizierungselement befindet sich das Identifizierungselement (17) und in Reaktion auf die Authentifizierung des Identifizierungselements (17) zu authentifizieren, die Verriegelung oder Entriegelung des Flügels (3) des Fahrzeugs (1) zu steuern, **dadurch gekennzeichnet, daß** sie ferner Mittel (13) entfernten optischen Erkennung einer vorbestimmten Geste eines Körperelements für die Tür zu entriegeln, bevor der die Aktion im Falle eines positiven Gestenerkennung ausgeführt wurde, mittels Fern optische Erkennung einer vorbestimmten Geste eine Kamera (13) umfasst, und die Bewegung eines Fußes zu erkennen in der Lage (25).

8. Vorrichtung nach Anspruch 7, **dadurch gekennzeichnet, daß** die Mittel (13) zur Erkennung ausgebildet sind, um die Drehung die Drehrichtung eines Fußes (25) zu erkennen.

## Claims

1. A method for automatically unlocking a leaf (3) of a motor vehicle (1) using a hands-free access system (4) comprising a central unit (5) intended to be installed inside the vehicle (1), a portable identification element (17), said central unit (5) being capable of communicating by radio frequency distance with the identification member (17) to authenticate and, in response to the authentication of the identification unit (17) controlling the locking or unlocking of the vehicle door, the method comprising the steps of:
- Detecting the presence of an identification member (17) in a predefined perimeter (19) around the vehicle (1),
- Authenticating that the identification member (17) is associated with the vehicle (1),
- In case of positive authentication, place the access system in a "ready to unlock" state for all the opening (3)
**characterized in that** the method further comprises a step (106) of remote optical recognition of a predetermined gesture of a body member (25) the recognition step being carried out using a camera and comprising recognition of the movement of a foot (25), and that in case of positive recognition of the gesture, the opening (3) before which the action has been executed, is unlocked.

2. Method according to the preceding claim, **characterized in that** the recognizing step comprises recognizing the rotational movement of a foot (25).

3. A method according to claim 2, **characterized in that** the recognizing step comprises recognizing the direction of rotation of a foot (25).

4. A method according to any preceding claims wherein the leaf (3) is equipped with a motorized support unit to the opening of the door, **characterized in that** the releasing step (108) is followed by an automatic opening (110) of the opening by means of the motor-driven assist unit.

5. A method according to any one of the preceding claims, **characterized in that** the means of remote optical recognition of a predetermined gesture of a body member, including the camera (13) are activated only after a positive authentication.

6. A method according to any one of the preceding claims, **characterized in that** the step (106) of remote optical recognition by a camera (13) of a predetermined gesture of a body member is formed from pictures levels gray.

7. Device for automatically unlocking a leaf (3) of a motor vehicle (1) for implementing the method according to any one of claims 1 to 6, comprising a hands-free access system (4) comprising a central unit (5) intended to be installed inside the vehicle, a portable identification element (17), said central unit (5) being able to communicate using remote radio frequencies with the identification member (17) during that the identification member is located in a predefined perimeter (19) around the vehicle (1) to authenticate the identification member (17) and in response to the authentication of the identification member (17) controlling the locking or unlocking of the leaf (3) of the vehicle (1), **characterized in that** it further comprises means (13) remote optical recognition of a predetermined gesture of a body member for unlock the door before which the action was executed in case of a positive gesture recognition, means of remote optical recognition of a predetermined gesture comprising a camera (13), and being able to recognize the movement of a foot (25).

8. Device according to claim 7, **characterized in that** the means (13) for recognizing are adapted to recognize the rotation or the direction of rotation of a foot (25).
